# EUROPEAN PATENT SPECIFICATION

(11) **EP 1 390 194 B1**
(45) Date of publication and mention of the grant of the patent: **05.04.2006**
(21) Application number: 02743094.1
(22) Date of filing: 24.05.2002
(51) Int. Cl.: B29D 30/00, B29D 30/10

(54) **AUTOMATIC PROCESS AND PLANT FOR TYRE MANUFACTURE**
AUTOMATISCHER PROZESS UND AUTOMATISCHE ANLAGE ZUR REIFENHERSTELLUNG
PROCESSUS AUTOMATISE ET INSTALLATION DE PRODUCTION DE PNEUS

(30) Priority: 29.05.2001 EP 01113112; 07.06.2001 US 296161 P
(43) Date of publication of application: 25.02.2004
(73) Proprietor: Pirelli Pneumatici S.p.A., 20126 Milano (IT)
(72) Inventor: CARETTA, Renato, I-21013 Gallarate (IT); GALIMBERTI, Maurizio, I-20133 Milano (IT); AMURRI, Cesare, I-20099 Sesto San Giovanni (IT); PUPPI, Cristiano, I-22028 Guanzate (IT); DUCOLI, Giuseppe, I-21053 Castellanza (IT); ALBIZZATI, Enrico, I-28040 Lesa (IT)
(74) Representative: Giannesi, Pier Giovanni
(86) International application number: PCT/EP2002/005744
(87) International publication number: WO 2002/096630

(56) References cited:
- EP-A- 0 448 407
- EP-A- 0 485 127
- EP-A- 0 875 364
- EP-A- 0 976 536
- WO-A-01/32409
- US-A- 4 877 468
- US-A- 5 221 406

## Description

The present invention relates to a process and a system for producing different models of tyres simultaneously. In particular, the present invention relates to a system comprising a plurality of operating units for building the green tyre, supplied continuously with the mixtures required for making the structural components for building the tyre.

Patent EP 922561 describes a system for producing tyres, comprising a building line for making green tyres and a vulcanizing station comprising at least one vulcanizing unit fitted with a plurality of vulcanizing moulds in which the green tyres are vulcanized. The number of vulcanizing moulds is selected in such a way that the capacity of the building line to produce green tyres is satisfied. The system can minimize the storage of green tyres with different characteristics which are produced alternately.

Document US-4,877,468_relates to a tyre manufacturing process according to which the tyre constitutive elements are formed by starting from respective masterbatches which are mixed with given chemical compounds inside respective continuous mixers to obtain respective final mixes. These obtained final mixtures are hot-fed to respective continuous production means, such as extruders, for obtaining semifinished products that are hot-fed onto a green tyre building drum. When the green tyre is obtained, the latter is hot-fed to a curing department in such a manner to preserve at least part of the initial mixing thermal energy and at least part of the initial continuous production thermal energy.

Document WO 01/32409 relates to a manufacturing plant which is provided with work stations, each arranged to make and assemble at least one structural component of the tyres being processed. The structural components of each tyre are assembled on a toroidal support provided with bar codes through which the model of the tyre to be manufactured is identified and consequent adaptation of the work stations to the particular tyre working is carried out. Robotized arms sequentially transfer the individual tyres between the different work stations, as well as to a curing line equipped with moulds mounted on a turntable. According to said document, the transfer rate on the curing line is set to be the same of the transfer rate between the work stations.

The applicant has considered the problem of supplying the necessary mixtures to a system for producing different models of tyres simultaneously, which requires the use of a plurality of different mixtures within a single operating cycle. In particular, the applicant has considered the problem of supplying this system in such a way as to minimize the waste of mixture and to eliminate the stages of storing mixture in the system before the mixture is used for building tyres in subsequent operating cycles.

In this respect, the applicant has observed that in such a system, where different models of tyres are built within a single operating cycle, it is necessary to produce the various types of mixture in small quantities within each unit of time. In spite of this, the total volume of the different mixtures to be produced is generally high, especially in the case of automatic systems intended for large-scale production (for producing thousands of articles per day, for example).

The applicant has observed that these requirements for supplying the mixtures cannot be satisfied by the processes conventionally used in the rubber industry, in other words the discontinuous processes, known as "batch" processes, in which the various components of the mixture are incorporated and dispersed in the elastomeric material in internal mixers, usually Banbury mixers, which, in order to operate efficiently, require specific loading factors for each charge, and complex operating cycles comprising a plurality of operations of incorporation and mixing of the ingredients, followed by stages of cooling and storage.

The applicant has found that, in an automatic system for producing tyres of different types, in which each tyre produced is made in a plurality of operating units, the various mixtures required for each operating unit can be efficiently and advantageously supplied continuously by means of at least one extruder unit. Each operating unit deposits a structural component, made from a predetermined type and quantity of mixture, on a toroidal support which reproduces the internal shape of a tyre. Each structural component is formed in the operating unit according to predetermined specifications. These specifications comprise the recipe for the type of mixture suitable for making the structural component, which has predetermined characteristics, of mechanical strength and/or flexibility for example, which differ from those of another structural component.

The tyre is made by overlapping a plurality of the said structural components, and therefore requires the provision of a plurality of predetermined mixtures which are different from each other. Furthermore, owing to the necessity of rapidly changing the model of tyre to be produced, when required, the mixture production unit must have a high degree of flexibility. This is because different models of tyres are generally made by using different mixtures for the various components, or may even require the introduction of new structural components of the tyre.

In other words, making a tyre in such a system requires the production of a plurality of different mixtures in a mixture production unit, on the basis of a plurality of predetermined recipes. Furthermore, the change of production from one predetermined mixture to one with different characteristics must be carried out swiftly and essentially without any waste of mixture.

Within one operating cycle the mixture production unit continuously supplies the tyre building system with a quantity of mixture which is essentially equal to the quantity of mixture required by the operating cycle in question: this makes it unnecessary to store the produced mixture, and minimizes wastage.

On the other hand, supplying mixtures discontinuously requires the production of a quantity of each type of mixture which depends on the dimensions of the Banbury mixer, regardless of the production requirements of the tyre building system. In other words, it is impossible to achieve the requisite match between the mixture produced and the mixture required by the system in a discontinuous mixture supply system.

However, this match can be achieved by means of a continuous mixture production process, which requires the use of extruder units which enable different mixtures to be formed by changing the ingredients of the mixture and/or their proportions in an automatic way, thus eliminating stages of storage of the produced mixtures and minimizing the wastage of material. In other words, by using a continuous production process, the different mixtures can be produced with an output which can be regulated according to the production requirements of the whole process. In particular, the output can be regulated by varying certain process parameters, such as the filling factor of the extruder cylinder and the speed of rotation of the screws.

Additionally, the change of mixture takes place with the minimum wastage of material and without interruption of the continuous supply to the said operating units. This is because the applicant has found that the viscoelastic properties of the material being processed enable the extruder to be emptied rapidly, owing to a pulling action exerted by the outgoing material on the material still present in the cylinder.

A continuous mixture production process based on extrusion also allows precise control of the process parameters, particularly the temperature, because of the low output of the extruder. This low output does not constitute a disadvantage, since the system according to the present invention requires that a plurality of different mixtures be produced in small quantities within each unit of time, without thereby limiting the output of the system as a whole.

In a first aspect, the present invention relates to a process for producing tyres in an automatic system according to claim 1.

A further aspect of the present invention relates to a system for producing tyres according to claim 11.

Preferred embodiments of the invention are defined in the dependent claims.

Further characteristics and advantages of the present invention are set out in greater detail in the following description, with reference to the attached drawings which are provided solely for explanatory purposes and without any restrictive intent, and which show:
in Figure 1, an example of a tyre made by the system according to the present invention;
in Figure 2, an example of a layout of the system according to the present invention, indicated in a general way by the number 1.

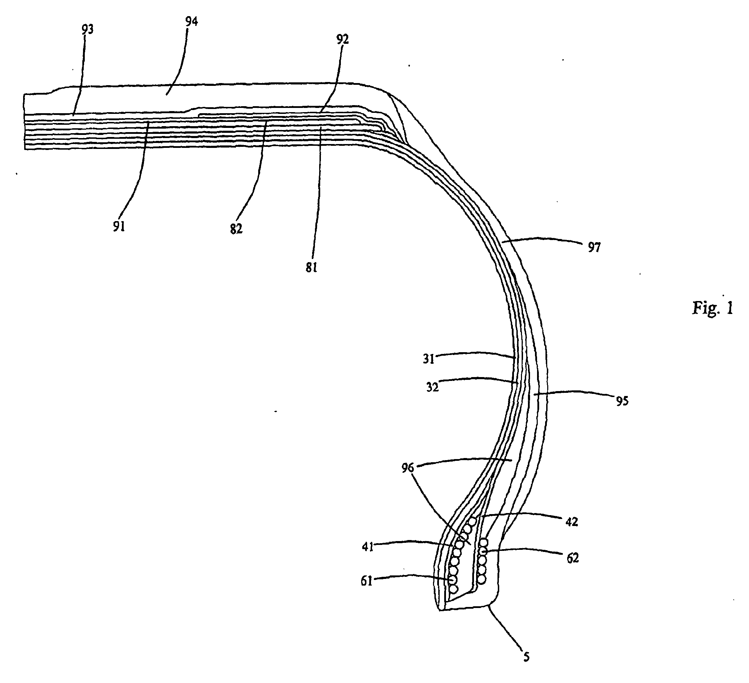

Figure 1 shows in radial section the generic structure of a model of tyre for vehicle wheels, made according to the present invention.

In general, the said models of tyres comprise structural components which are preferably laid on top of each other during the stages of assembly of the tyre.

More particularly, the various structural components are conveniently engaged on a supporting member, preferably consisting of a toroidal support or drum whose profile essentially reproduces the internal configuration of the tyre to be produced. This toroidal support is made in such a way that it can be easily removed from the tyre on completion of the process.

These structural components are essentially of two types:
- a first type of component is in the form of a continuous elongate element which is applied to the surface of the toroidal support which is rotated about its axis, in a circumferential deposition mode; preferably, the said continuous elongate element consists exclusively of elastomeric material; preferably, the said elongate element is cut after it has been deposited;
- a second type of structural component is in the form of a reinforced strip element which is applied to the toroidal support, preferably in a radial deposition mode, directed towards the axis of rotation of the toroidal support; preferably, this strip element consists of a reinforcing structure, comprising for example at least one textile or metallic cord element incorporated in a strip of elastomeric material which covers and holds together these cord elements.

In particular, the model of tyre shown in Figure 1 comprises an internally hollow toroidal structure, usually known as the carcass, comprising a plurality of structural elements assembled together, and having two beads, each formed along one of its inner circumferential edges, for fixing the tyre to a corresponding mounting rim. The said carcass comprises, firstly, at least one carcass ply and at least one pair of annular reinforcing cores, called bead wires, which are circumferentially inextensible and are inserted in the said beads, at least one bead wire being inserted in each bead.

The carcass ply includes a supporting structure, comprising textile or metallic cords, which has each of its edges associated with a corresponding bead wire, and which is axially extended from one bead to the other to form the said toroidal structure.

In tyres of the so-called radial type, the aforesaid cords lie essentially in planes which contain the axis of rotation of the tyre, or at a small distance therefrom.

On the crown of this carcass an annular superstructure, known as the belt structure, normally consisting of one or more strips of rubberized fabric, radially superimposed on each other to form a so-called "belt package", and a tread made from elastomeric material, wound around the belt package, impressed with a relief pattern for the rolling contact between the tyre and the road, are placed. Two sidewalls of elastomeric material, each extending radially outwards from the outer edge of the corresponding bead, are also provided on the carcass, in axially opposed lateral positions.

In tyres of the type known as "tubeless", i.e. those not requiring an inner tube when in use, the inner surface of the carcass is normally covered with a so-called "liner", i.e. one or more layers of elastomeric material which is impermeable to air. Finally, the carcass can comprise other known elements, i.e. reinforcements, strips and fillers, the number and type of which depend on the specific model of tyre to be made.

It should be noted that, for the purposes of the present description, the term "elastomeric material" denotes a rubber mixture in its entirety, i.e. the assembly formed by at least one polymeric base suitably amalgamated with reinforcing fillers and/or process additives of various types.

In particular, the section in Figure 1 shows, in radial sequence from the interior to the exterior, some of the structural elements mentioned above, namely a first liner layer 31 and a second liner layer 32, the ends of a first set of lengths of band 41 of a carcass ply, and the ends of a second set of lengths of band 42 of the said carcass ply.

The drawing also shows, in the area of the tyre bead, a first bead wire comprising nine turns of cords 61, and a second bead wire comprising five turns of cords 62. In the crown area of the tyre there are a belt package comprising a first belt strip 81 and a second belt strip 82, one on top of the other, a first layer 91 of nylon cords orientated at 0°, which completely covers the layers of belt, and a pair of layers 92 of nylon cords orientated at 0°, which cover only the edges of the belt strips.

A tread 94 provided with a base layer 93 is laid on top of the preceding layers.

In the bead area there are also a first filler of abrasion-resistant mixture 95 and a pair of fillers 96 of very hard mixture, located in the bead area, one between the first lengths of band 41 and the second lengths of band 42, and the other between the second lengths of band 42 and the abrasion-resistant filler 95. A pair of sidewalls 97, radially extending from the bead area to the shoulder area of the tyre, covers the carcass and come into contact with the lateral edges of the tread 94.

The definition of the cross section of the tyre structure defines the whole tyre, as it is a solid of rotation.

In the example in Figure 1, the sidewalls, the tread, the abrasion-resistant element, the under-belt strips, the liners and the various elastomeric fillers constitute the structural components of the first type, i.e. the continuous elongate elements; the carcass plies and the belt strips constitute the structural components of the second type, i.e. the reinforced strip elements.

Each model of tyre is essentially distinguished from the others by a set of physicochemical, structural, dimensional and visual characteristics, and by its specific performance characteristics, such as maneuverability, comfort, adhesion in wet conditions, noise, etc. The physicochemical characteristics are essentially related to the type and composition of the materials, particularly to the recipes for the various mixtures used in the formation of the elastomeric materials. The structural characteristics essentially define the number and type of structural components present in the tyre, and their positioning with respect to each other in the tyre structure.

The dimensional characteristics relate to the geometrical measurements and the cross-sectional profile of the tyre (external diameter, maximum chord or width, sidewall height and sidewall/chord ratio, in other words the section ratio) and will be simply referred to as "meaburement" or "measurements" in the following text. The visual characteristics typically comprise the grooving of the rolling surface of the tyre, ornamental patterns, and various letters or distinctive symbols reproduced on the tyre, on the sidewalls for example, and will be referred to throughout the remainder of this description, albeit imprecisely, as the "tread design".

For the purposes of the present invention, a model of tyre is considered to be a tyre having a predetermined size predetermined structural components in its cross section, and a predetermined tread design.

In a preferred embodiment, the radially deposited structural components are cut beforehand into lengths of specified sizes, while the circumferentially deposited components are cut after being wound on the toroidal support.

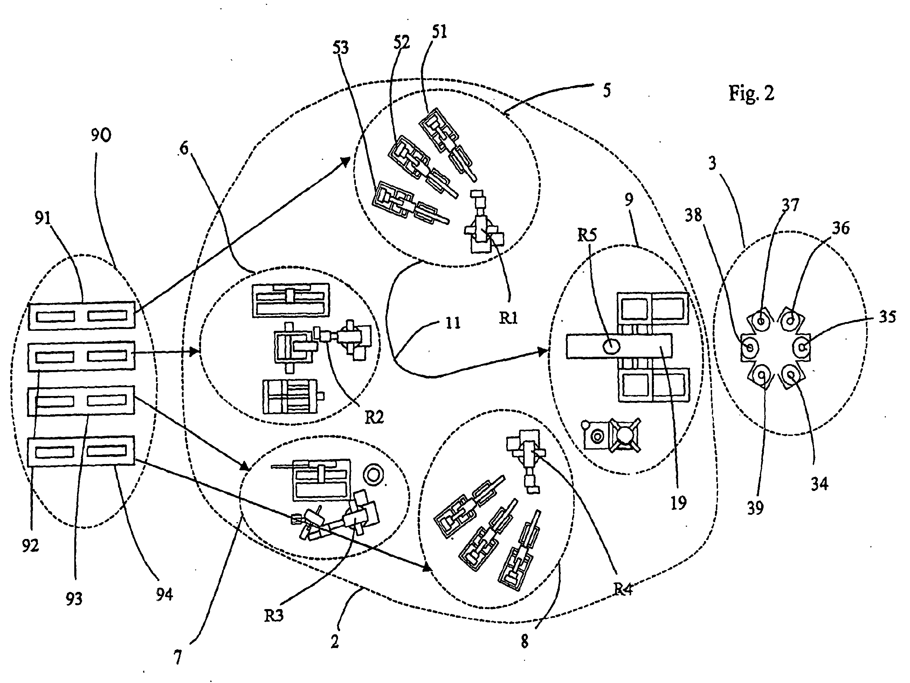

Figure 2 shows an example of the tyre production system which comprises a building unit 2 for making green tyres, in which each tyre being produced is built by assembling its structural components in a predetermined sequence, a vulcanizing unit 3 in which each tyre arriving from the building unit 2 is vulcanized in a corresponding vulcanizing mould 34, 35, 36, 37, 38, 39, and a mixture production unit 90 which can supply the building unit with a plurality of predetermined mixtures from which the aforesaid structural components are made.

The building unit 2 comprises a plurality of operating stations (5, 6, 7, 8, 9 in the example in Figure 2) arranged consecutively along a building path, preferably in the form of a closed loop, indicated for guidance by the arrow 11 in the attached Figure 2. The system also comprises at least one supply station, at least one temperature stabilizing device, and a plurality of waiting stations which are not shown in Figure 2.

The operating stations 5, 6, 7, 8, 9 can operate simultaneously, each on at least one tyre being produced, to mount at least one of the tyre's structural components on to it.

Different models of tyres can be processed simultaneously both in the building unit 2 and in the vulcanizing unit 3.

For the purposes of the present invention, "different models of tyres" means that the said models can differ from each other in their dimensional and/or structural and/or physicochemical and/or visual characteristics.

The tyres being produced are distributed along the building unit 2 in such a way that the different models follow each other in a preset sequence. In the building unit 2 it is possible to provide, for example, a plurality of sequences, each consisting of different models of tyre, which advantageously follow each other cyclically, or sequences each of which advantageously consists of a tyre of a first model interposed between two tyres of a second model, or sequences each of which consists of tyres all of the same model.

Devices for the transfer and movement of tyres operate in the system, for the sequential transfer of each tyre being produced from one of the operating stations 5, 6, 7, 8, 9 of the building unit 2 to the next, and to the vulcanizing unit 3. The said devices also move the toroidal support during the depositing of at least one of the structural components.

Preferably, these devices comprise one or more robotic arms (R1, R2, R3, R4, R5 in the example in Figure 2), each of which is associated with at least one of the operating stations 5, 6, 7, 8, 9 of the building unit 2 and with the vulcanizing unit 3. These robotic arms are such that each one can operate preferably on a single toroidal support to carry out the sequential transfer of each tyre being produced.

The tyre building is carried out by moving the toroidal support and orientating it in space, and applying to it the structural components extruded for both circumferential and axial deposition.

The said robotic arms advantageously support the said toroidal supports so that they project, in other words by gripping them at one side only at the position of the axis of rotation, thus enabling the various components to be deposited along the whole axial extension of the support which has a curvature with two inflections.

A central processing unit controls the transfers along the said loop path 11 and determines, within a desired critical period, the number and composition of the said sequences of tyres. This unit can control the said transfer and movement devices in such a way as to coordinate the stages of production on each model of tyre in the building unit 2 and in the vulcanizing unit 3.

More particularly, in the illustrated embodiment there is a first robotic arm R1 which takes the appropriate toroidal support from the supply station and inserts it into the temperature stabilizing device (neither of these is illustrated in Figure 2).

This device brings the toroidal support to a suitable temperature to permit the subsequent operations, and particularly to promote the adhesion of the first layer of elastomeric material to the metal of the support. This temperature is preferably in the range from 80°C to 90°C.

Preferably, the said first robotic arm R1 transfers the toroidal support from the temperature stabilizing device to the first operating station 5, where the first structural components of the tyre are assembled. The assembly operation can, for example, include the coating of the external surface of the toroidal support with a thin layer of air-impermeable elastomeric material, usually called the "liner", carried out by a liner production unit 51, and the application of any necessary elastomeric strips in the areas corresponding to the beads of the tyre, carried out by the strip production unit 52, and/or the formation of an additional layer of covering made from elastomeric material and superimposed on the liner, carried out by the sub-liner production unit 53.

Preferably, the formation of each structural component of the tyre is carried out at the first operating station 5, as at the remaining operating stations 6, 7, 8, 9, in conjunction with the previously described stage of assembly, by the processing of at least one basic semi-finished product, which is preferably identical for each model of tyre, supplied in a predetermined quantity according to the model of tyre to be made.

In particular, at the first operating station 5 the liner, the elastomeric strips and/or the additional covering layer can advantageously be produced by wrapping around the toroidal support in use, in consecutively adjacent turns which may be at least partially overlapping, at least one elongate element of elastomeric material, having a width in the range from 0.5 to 3 cm, for example, and taken directly from a corresponding extruder head, from a reel or from other suitable supply devices associated with the first operating station 5.

The wrapping of the turns can advantageously be simplified by making the first robotic arm R1 responsible for holding the toroidal support, by means of suitable pick-up and operating members, and causing it to rotate about its axis, by moving it across pressure rollers or equivalent application devices (not described) combined with the supply devices, in such a way that the elongate strip is correctly distributed along the external surface of the toroidal support. For further details of the process for applying the structural components to a toroidal support with the aid of a robotic arm, reference should be made to International Patent Application WO0035666 in the name of the present applicant.

On completion of the assembly of the components in the first operating station 5, the first robotic arm R1 sets down the toroidal support with the corresponding tyre being produced in a waiting station. A second robotic arm R2 picks up the toroidal support from the said waiting station to transfer it to the next operating station (the second station 6 in the example in Figure 2), where the structural components for the formation of the carcass structure of the tyre are assembled.

More particularly, in the example in Figure 2, one or more carcass plies are formed and assembled at the second operating station 6, together with a pair of annular reinforcing structures in the areas corresponding to the beads of the tyre. Each of these structural components is made directly during the assembly stage, by a supply unit, which generates a continuous strip-shaped element in a predetermined quantity according to the model of tyre being produced.

For example, the carcass ply or plies can be formed by sequentially depositing on the toroidal support a plurality of lengths of strip cut individually from the said continuous strip element formed from a band of rubberized cords which are parallel to each other. Each annular reinforcing structure can in turn comprise a circumferentially inextensible insert consisting, for example, of at least one metallic cord element wound in a plurality of radially superimposed turns, together with a filler insert of elastomeric material which can be produced by applying an elongate elastomeric element wound in a plurality of axially adjacent and/or radially superimposed turns.

For further explanations of the process for making the carcass structure, reference is made to European Patent Application EP 928680 in the name of the present applicant.

To facilitate the sequential assembly of the various structural components in the specified order, the second operating station 6 is provided with at least three different operating units, one for depositing the lengths of strip, one for depositing the metallic cord element and one for depositing the elastomeric elongate element, each of which operates simultaneously on a corresponding tyre being produced. Consequently, three tyres, of different models if necessary, can be processed simultaneously at this operating station, each tyre being sequentially transferred from one operating unit to the next until the carcass structure is complete. The sequential transfer of the tyres to the different operating units can preferably be carried out by the second robotic arm R2, assisted if necessary by a further robotic arm and/or by any necessary auxiliary transfer devices and by a multiple waiting station (these are not shown in Figure 2), in which more than one toroidal support can be present simultaneously. This system can minimize the waiting times when different models of tyres are produced in this operating station.

On completion of the carcass structure, the third robotic arm R3 picks up the support and carries it to the third operating station 7, at which the structural components forming the so-called belt structure of the tyre are formed and assembled. In particular, an operating station deposits, directly on the carcass structure formed previously, two under-belt strips extending circumferentially in the shoulder areas of the tyre. These under-belt strips can be directly extruded by an extruder head and applied with the aid of pressure rollers or equivalent application devices. A second operating unit forms on the carcass structure a first and a second belt strip, each formed by sequential deposition of lengths of strip which are circumferentially adjacent, each of which is formed by cutting to size a continuous strip element consisting of a plurality of cords lying parallel and adjacent to each other and incorporated in an elastomeric layer. A further operating unit forms a further belt strip by wrapping a continuous cord in turns which are axially adjacent to each other and radially superimposed on the underlying belt layers. Further details of a possible method of making the belt structure are described in International Patent Application 01WO-EP/11598 in the name of the present applicant.

On completion of the belt structure, the fourth robotic arm R4 transfers the tyre being produced to the fourth operating station 8. At this operating station, a tread is applied to the toroidal support, this tread being produced by wrapping at least one further elastomeric strip element in consecutively adjacent and overlapping turns until a tread of the desired shape and thickness is produced. At this station abrasion-resistant elements are similarly applied in the areas corresponding to the beads, and the sidewalls are applied, the latter being produced by winding at least one elastomeric strip in adjacent and/or overlapping turns.

On completion of this operation, the fourth robotic arm R4 deposits the built tyre on the terminal waiting station from which it will be transferred to the vulcanizing unit 3.

The vulcanizing unit 3 advantageously comprises at least one set of vulcanizing moulds 34, 35, 36, 37, 38, 39, the number of these being equal to the quantity of tyres included in the said sequence of tyres being produced in the building unit 2. In the illustrated example, there are six vulcanizing moulds 34, 35, 36, 37, 38, 39, each corresponding to the dimensions of one of the models of tyre built in the building unit 2.

Preferably, the moulds 34, 35, 36, 37, 38, 39 are mounted on a rotating platform which can be rotated with a step-by-step motion, in such a way that the moulds are made to follow a path within the vulcanizing unit 3 which brings them sequentially, one after another, to a loading-discharge station for the tyres being produced. This rotation preferably takes place in the form of a first rotation in a first direction of rotation and then a rotation in a direction opposite the first. Alternatively, this rotation can be in the form of a closed loop.

Each of the moulds 34, 35, 36, 37, 38, 39 is supplied with pressurized steam through a corresponding connecting duct (not shown) extending radially from a central column in which steam supply devices, consisting, for example, of a boiler are incorporated or otherwise connected. The whole rotating platform can advantageously be enclosed in an insulated structure having at least one access aperture located at the loading-discharge station 40, in such a way that excessive dissipation of heat to the exterior is prevented.

Advantageously, the transfer of the individual tyres being produced into the corresponding moulds 34, 35, 36, 37, 38, 39 is carried out by the robotic arm R5 at a rate equal to the rate of completion of the green tyres being produced in the operating stations distributed on the path through the building unit 2.

More particularly, in the illustrated embodiment, there is a first robotic arm R1, which can be movable along a guide structure 19, in case, and which operates between the building unit 2 and the vulcanizing unit 3, to pick up a finished tyre from the latter and transfer it to the fifth operating station 9, where the tyre is removed from the corresponding toroidal support.

The toroidal support extracted from the tyre is then transferred from the fifth operating station 5, by means of the first robotic arm R5, to the temperature stabilization device.

The method of treating the individual tyres on the path through the building unit 2 is such that a structural component can advantageously be deposited regardless of whether another component has been completed on the immediately preceding tyre being produced. The system is characterized in that the structural components of the tyre are prepared essentially at the time when they are deposited, making it possible to operate in the absence of previously stored semi-finished products, and to immediately adapt each unit to the model of tyre being produced, thus avoiding wastage of material.

Each of the operating stations 5, 6, 7, 8, 9 is provided with one or more operating units, and also comprises feed devices for supplying the mixtures required for making the corresponding structural components, operating in combination with application devices present in the aforesaid units, which apply the mixtures and/or the resulting structural component to the tyre being produced. Further details of the tyre production system are described in the copending patent application No. 99EP-123860.1, in the name of the present applicant.

These mixtures are produced in a mixture production unit 90, which comprises at least one extruder unit, preferably a plurality of extruder units (91, 92, 93 and 94 in Figure 2) which can mix elastomeric materials with the other components of the mixtures (reinforcing fillers, plasticizers, vulcanizing agents, accelerators, etc.), each of which is directed to the production of a specific type of mixture or a group of mixtures of different types.

Using a plurality of extruder units (91, 92, 93 and 94), although it increases the complexity of the system, makes it possible to achieve a greater flexibility in the production of the mixtures, since each extruder unit is dedicated to the production of a limited number of different mixtures. It is also possible to adapt the configuration of the individual extruder unit in this way to the specific mixing requirements which characterize each type of mixture, with a consequent improvement in the quality of the mixture produced.

In the example in Figure 2, each of the extruder units 91, 92, 93 and 94 preferably comprises a pair of extruders, arranged in sequence in such a way that the elastomeric material processed in a first extruder is supplied to the input of a second extruder.

Each extruder preferably has a pair of screws fitted in a cylinder, which is provided with at least one feed hopper and an aperture for discharging the mixture produced. The pair of screws, preferably arranged with interpenetrating threads and co-rotating within the cylinder, exerts a masticating action on the elastomeric material and incorporates and homogenizes the other components of the mixture in this material, in order to produce an elastomeric material having predetermined characteristics.

The said first extruder is used to prepare a compound, i.e. a mixture without heat-sensitive components, particularly vulcanizing agents and accelerators. Thus the mixing conditions (particularly the temperature) can be adjusted in such a way as to provide optimal dispersion of the reinforcing filler in the elastomeric material. The compound is then sent to the second extruder for the completion of the mixture by addition, incorporation and homogenization of the heat-sensitive agents, particularly vulcanizing agents and accelerators.

As is known, an elastomeric mixture for producing tyres comprises a base elastomeric material, which includes at least one diene elastomeric polymer, at least one reinforcing filler (usually carbon black, silica or mixtures of these) and a series of so-called "minor ingredients", which are added in small quantities to the mixture and whose weight generally does not exceed 5% of the total weight of the mixture. Examples of minor ingredients are vulcanizing agents (particularly sulphur or sulphur donors), vulcanizing accelerators, vulcanizing retardants, antidegradants, antiozonants, antioxidants, cross-linking modifiers, adhesion promoters, silica bonding agents, stabilizers, resins, inhibitors, catalysts, etc. Plasticizers such as aliphatic and/or aromatic oils, waxes, and the like are also usually added to the mixture in order to improve the workability of the elastomeric material.

Preferably, the first extruder is supplied with at least one elastomeric polymer, preferably in subdivided form, with the reinforcing filler and, in case, with at least one plasticizer. The non-heat-sensitive minor ingredients, usually in the form of solids or liquids, are also added.

The compound produced in the first extruder is then preferably filtered and granulated before being supplied to the second extruder, where the mixture is completed.

The various ingredients can be supplied by batch feeders, particularly gravimetric batch feeders.

One type of mixture produced by an extruder unit is used, for example, by certain operating units of the building unit, while another type of mixture, produced in another extruder unit, is used by other operating units of the building unit. Each structural component is formed in the operating unit according to a predetermined operating specification, which determines, in addition to the other characteristics of the component, the recipe for the mixture to be produced and used for the component in question.

Each extruder unit is advantageously capable of producing at least one type of predetermined mixture. This is because, in a system such as that described in the example of Figure 2, different models of tyres can be made in the same operating cycle. The models of tyres differ from each other not only in that they comprise different structural components, but also in that they have equivalent structural components formed from different mixtures.

Therefore, in a tyre production sequence which comprises different models which require, for example, different mixtures for the same structural component; it is necessary to carry out at least one change of the mixture produced by at least one extruder unit. The change of the mixture produced requires different proportions of the ingredients of the mixture. Since a continuous production process is used, the change of mixture is carried out with minimum wastage of material and without interruption of the continuous supply to the said operating units. The applicant has found that the filling capacity of the extruder is limited and that the viscoelastic properties of the material being processed allow the extruder to be rapidly emptied because of a pulling action exerted by the outgoing material on the material still present within the extruder.

As mentioned above, different structural components generally require different mixtures. In general, the structural components consisting of reinforced strip elements, such as the carcass plies and the belt strips, require the use of a type of mixture having different characteristics from those of the type of mixture used for structural components consisting of continuous elongate elements, such as the tread strip and sidewalls. Additionally, even within the same category of continuous elongate elements or reinforced strip elements, some structural components require the use of specific mixtures. For example, the mixture used for the tread is different from the mixture used for the sidewalls.

For example, the following table shows the compositions of mixtures suitable for making the sidewalls, tread and carcass plies, which can be produced by different extruder units operating in parallel and each consisting of two extruders in series. The compositions are shown in "phr", i.e. parts by weight per 100 parts by weight of the elastomeric base material.

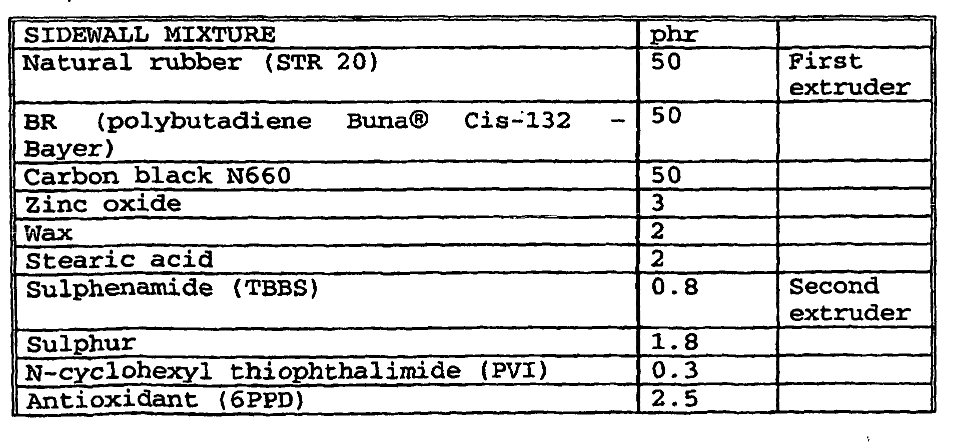

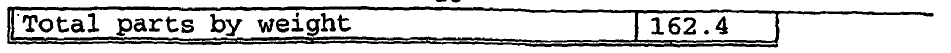

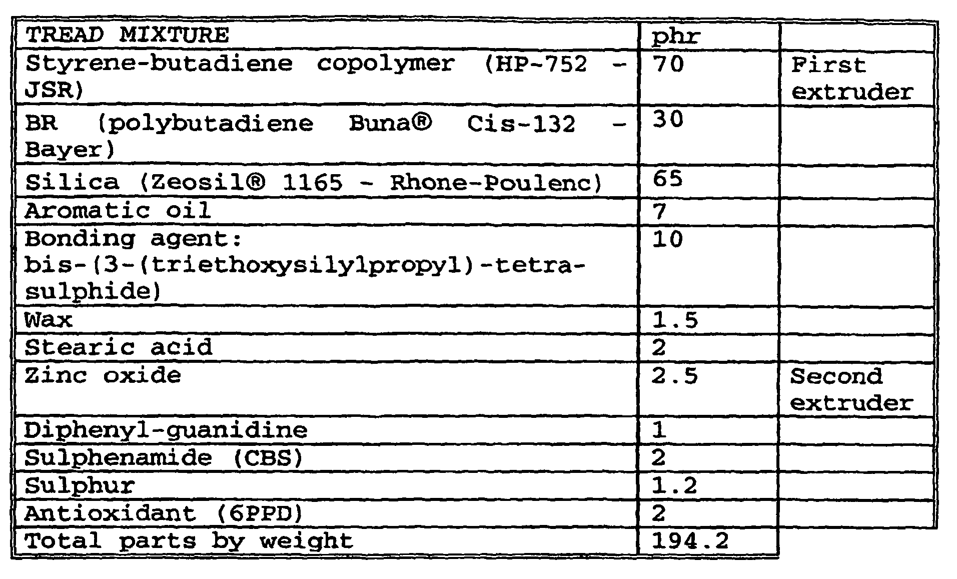

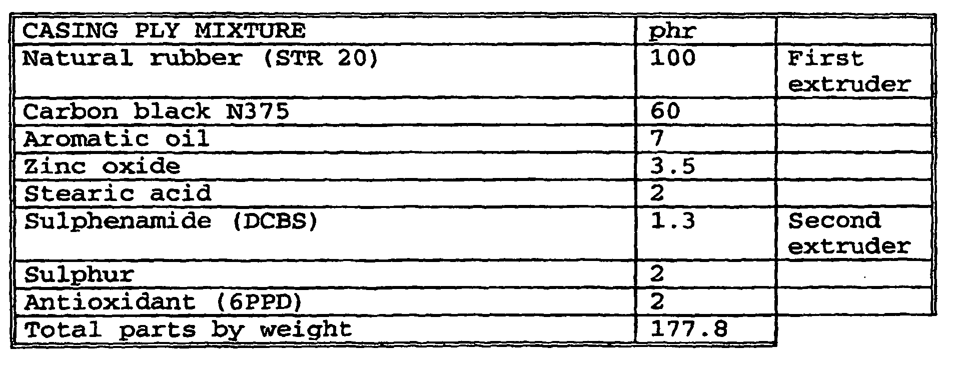

Each of the structural components consisting of reinforced strip elements, such as the carcass plies and the belt strips, comprises a band of cords, parallel to each other, embedded in an elastomeric mixture. This band is formed in a feed unit to which is supplied the mixture required for covering the cords and forming the said band.

The different mixtures produced are supplied directly to the operating units in each operating station. In particular, the operating units which deposit structural components consisting of continuous elongate elements are directly supplied with the mixture produced by an extruder unit. An application device of the operating unit generates from this mixture the continuous elongate element which is applied by circumferential deposition to the toroidal support.

Each of the operating units which deposit structural components consisting of reinforced strip elements also comprises a feed unit, which generates the said continuous strip element in a predetermined quantity according to the model of tyre to be made. This feed unit is supplied directly with the mixture produced by an extruder unit.

Additionally, the operation of each of the operating units provided in the individual operating stations 5, 6, 7, 8, 9, 10, and that of each of the robotic arms, is controlled by a programmable local processing unit in which the production specifications for the structural components are preferably stored. This unit controls appropriately the quantity of base semi-finished products supplied, and the movement imparted to the toroidal support, to ensure the correct formation of the individual structural components of the tyre being produced. In particular, this local processing unit can be programmed in such a way that the operation of the operating units of the robotic arms is adapted to the model of tyre which is processed from time to time in each individual operating station.

Additionally, in order to impart the system a higher operational flexibility, without constraints due to predetermined sequences of different models of tyres, it is preferable to associate each of the operating stations 5, 6, 7, 8, 9 with devices for identifying the model of tyre being produced, interacting with selection devices to determine the recipe and the quantity of the mixture to be used for forming each structural component at the operating station in question. For example, these identification devices can advantageously comprise a reader of bar codes or other types of code associated with the toroidal support of the tyre which can be identified by the local processing unit, using suitable reading devices, in order to determine the selection of the quantity of semi-finished product, for example by using predetermined tables of values.

When a tyre is transferred to any one of the operating stations 5, 6, 7, 8, 9, 10, the bar code reader identifies the model to which the tyre belongs, enabling the local processing unit to set the appropriate operating program for the said operating station, in addition or as an alternative to the instructions received from the central unit.

In general, the specifications for each structural component to be made, these specifications including the recipe for the specific mixture to be produced, are selected, preferably in this local processing unit, on the basis of a production request comprising the number of models of tyre to be produced, and, for each model, the number of tyres to be produced. Further details of this local processing unit are described in the copending patent application No. 00EP-830385.1 in the name of the present applicant.

Thus the whole system is supplied exclusively with raw materials, without the need to transfer semi-finished products, such as the mixtures, which have been made previously and stored elsewhere, and this provides a significant saving in transport costs and a considerable simplification of the logistics of the production process as a whole.

The movement of the tyres being produced is advantageously controlled in the form of a continuous flow in which the building unit 2 is directly connected to the vulcanizing unit 3, causing the individual tyres to be transferred sequentially at a rate equal to the rate of completion of the tyres in the complex building unit 2, thus advantageously eliminating the need to accumulate green tyres in storage buffers provided between the complex building unit and the complex vulcanizing unit.

Since the assembly sequence of the various structural components can be varied according to the model of green tyre to be made, the mean building time can be matched to the vulcanization time.

## Claims

1. Process for producing tyres in an automatic system comprising a plurality of operating stations (5, 6, 7, 8, 9), each designed to assemble at least one corresponding structural component on a tyre being produced, said process comprising the following steps:
- continuously producing a plurality of different mixtures, each mixture comprising at least one elastomeric material, the step of producing each mixture comprising:
- extruding in a first extruder a compound devoid of heat-sensitive components, and
- continuously introducing the extruded compound and the heat-sensitive components into a second extruder for completing the compound to obtain said mixture;
- continuously supplying at least one of said mixtures to each of said operating stations (5, 6, 7, 8, 9),
- making a plurality of said structural components from at least one of said mixtures,
- making a green tyre by depositing said structural components on a toroidal support, and
- vulcanizing said green tyre.

2. Process according to Claim 1, in which the step of extruding the compound comprises the step of supplying the first extruder with the at least one elastomeric material and a reinforcing filler.

3. Process according to Claim 2, in which the step of extruding the compound comprises the step of supplying at least one plasticizer.

4. Process according to Claim 1, in which the at least one elastomeric material is supplied in a subdivided form.

5. Process according to Claim 1, in which the compound produced in the first extruder is filtered before being supplied to the second extruder.

6. Process according to Claim 1, in which the compound produced in the first extruder is granulated before being supplied to the second extruder.

7. Process according to Claim 1, in which said structural components comprise at least one continuous elongate element.

8. Process according to Claim 1, in which said structural components comprise at least one reinforced strip element.

9. Process according to Claim 7, in which the step of making a green tyre comprises the step of carrying out a circumferential deposition of said continuous elongate element on said toroidal support.

10. Process according to Claim 8, in which the step of making a green tyre comprises the step of carrying out the deposition, on said toroidal support, of lengths of said reinforced strip element in a direction perpendicular to an axis of rotation of the tyre.

11. System for producing tyres, comprising:
- a mixture production unit (90) for producing a plurality of mixtures, each mixture comprising at least one elastomeric material;
- a building unit (2) comprising a plurality of operating stations (5, 6, 7, 8, 9), each operating station comprising at least one extruder and at least one toroidal support, and being designed for making and assembling at least one corresponding structural component of at least one model of tyre being produced, and
- a vulcanizing unit (3), having vulcanizing moulds (24, 25, 26, 27, 28, 29) for receiving the built tyres,
**characterized in that** the mixture production unit (90) comprises at least one extruder unit (91, 92, 93, 94), said at least one extruder unit comprising:
- a first extruder for preparing a compound devoid of heat-sensitive components, and
- a second extruder for completing the compound by introducing thereinto the heat-sensitive components, said first and second extruders being arranged in sequence,
said mixture production unit (90) continuously supplying at least one of said operating stations (5, 6, 7, 8, 9) with at least one mixture suitable for making said at least one tyre structural component.

12. System according to Claim 11, in which said structural components comprise at least one continuous elongate element.

13. System according to Claim 11, in which said structural components comprise at least one reinforced strip element.

14. System according to Claim 11, additionally comprising devices (R1, R2, R3, R4, R5) for the transfer and movement of the tyres being produced between the operating stations (5, 6, 7, 8, 9), said devices being capable of selectively moving each model of tyre within one operating station.

## Patentansprüche

1. Verfahren zur Herstellung von Reifen in einem automatischen System mit einer Vielzahl von Arbeitsstationen (5, 6, 7, 8, 9), von denen jede für die Montage wenigstens eines entsprechenden Bauelements an einem in Fertigung befindlichen Reifen so ausgelegt ist, wobei das Verfahren die folgenden Schritte aufweist:
- kontinuierliches Herstellen einer Vielzahl von unterschiedlichen Gemischen, von denen jedes wenigstens ein elastomeres Material aufweist, wobei bei dem Schritt zur Herstellung eines jeden Gemisches
-- in einem ersten Extruder eine Masse frei von wärmeempfindlichen Komponenten extrudiert und
-- in einem zweiten Extruder zur Vervollständigung der Masse zur Erzielung des Gemisches die extrudierte Masse und die wärmeempfindlichen Komponenten kontinuierlich eingeführt werden,
- kontinuierliches Zuführen wenigstens eines der Gemische zu jeder der Arbeitstationen (5, 6, 7, 8, 9),
- Herstellen einer Vielzahl von Bauelementen aus wenigstens einem der Gemische,
- Herstellen eines Rohreifens durch Ablegen der Bauelemente auf einem torusförmigen Träger und
- Vulkanisieren des Rohreifens.

2. Verfahren nach Anspruch 1, bei welchem der Schritt des Extrudierens der Masse den Schritt aufweist, den ersten Extruder mit dem wenigstens einem elastomeren Material und einem verstärkten Füllstoff zu beliefern.

3. Verfahren nach Anspruch 2, bei welchem der Schritt des Extrudierens der Masse den Schritt aufweist, wenigstens einen Weichmacher zuzuführen.

4. Verfahren nach Anspruch 1, bei welchem das wenigstens eine elastomere Material in einer unterteilten Form zugeführt wird.

5. Verfahren nach Anspruch 1, bei welchem die in dem ersten Extruder erzeugte Masse gefiltert wird, bevor sie dem zweiten Extruder zugeführt wird.

6. Verfahren nach Anspruch 1, bei welchem die in dem ersten Extruder erzeugte Masse granuliert wird, bevor sie dem zweiten Extruder zugeführt wird.

7. Verfahren nach Anspruch 1, bei welchem die Bauelemente wenigstens ein fortlaufendes langgestrecktes Element aufweisen.

8. Verfahren nach Anspruch 1, bei welchem die Bauelemente wenigstens ein verstärktes Streifenelement aufweisen.

9. Verfahren nach Anspruch 7, bei welchem der Schritt der Herstellung eines Rohreifens den Schritt aufweist, eine Umfangsablage des fortlaufenden langgestreckten Elements auf dem torusförmigen Träger auszuführen.

10. Verfahren nach Anspruch 8, bei welchem der Schritt zur Herstellung eines Rohreifens den Schritt aufweist, auf dem torusförmigen Träger die Ablage von Längenstücken des verstärkten Streifenelements in einer Richtung senkrecht zu einer Drehachse des Reifens auszuführen.

11. System zur Herstellung von Reifen
- mit einer Gemischherstellungseinheit (90) zur Erzeugung einer Vielzahl von Gemischen, von denen jedes wenigstens ein elastomeres Material aufweist,
- mit einer Baueinheit (2), die eine Vielzahl von Arbeitstationen (5, 6, 7, 8, 9) aufweist, von denen jede wenigstens einen Extruder und wenigstens einen torusförmigen Träger aufweist und für die Herstellung und Montage wenigstens eines entsprechenden Bauelements wenigstens eines Modells eines herzustellenden Reifens ausgelegt ist, und
- mit einer Vulkanisiereinheit (3), die für die Aufnahme der aufgebauten Reifen Vulkanisierformen (24, 25, 26, 27, 28, 29) aufweist,
**dadurch gekennzeichnet,**
- **dass** die Gemischherstellungseinheit (90) wenigstens eine Extrudereinheit (91, 92, 93, 94) aufweist, wobei die wenigstens eine Extrudereinheit,
-- einen ersten Extruder zur Vorbereitung einer Masse frei von wärmeempfindlichen Komponenten und
-- einen zweiten Extruder zur Vervollständigung der Masse aufweist, indem in sie die wärmeempfindlichen Komponenten eingeführt werden, wobei der erste und zweite Extruder in Reihe angeordnet sind, und
- **dass** die Gemischherstellungseinheit (91) wenigstens eine der Arbeitsstationen (5, 6, 7, 8, 9) mit wenigstens einem Gemisch kontinuierlich beliefert, das für die Herstellung wenigstens eines Reifenbauelements geeignet ist.

12. System nach Anspruch 11, bei welchem die Bauelemente wenigstens ein fortlaufendes langgestrecktes Element aufweisen.

13. System nach Anspruch 11, bei welchem die Bauelemente wenigstens ein verstärktes Streifenelement aufweisen.

14. System nach Anspruch 11, das zusätzlich Vorrichtungen (R1, R2, R3, R4, R5) zum Überführen und Bewegen in Herstellung befindlicher Reifen zwischen den Arbeitsstationen (5, 6, 7, 8, 9) aufweist, wobei die Vorrichtungen in der Lage sind, jedes Reifenmodell innerhalb einer Arbeitsstation selektiv zu bewegen.

## Revendications

1. Procédé de fabrication de pneus dans un système automatique comprenant une pluralité de stations fonctionnelles (5, 6, 7, 8, 9), conçues chacune pour assembler au moins un composant structurel correspondant sur un pneu en cours de production, ledit procédé comprenant les étapes consistant à :
- produire en continu plusieurs mélanges différents, chaque mélange comprenant au moins un matériau élastomère, l'étape de production de chaque mélange comprenant les opérations consistant à :
- extruder dans une première extrudeuse un composé dépourvu de composant sensible à la chaleur, et
- introduire en continu le composé extrudé et les composants sensibles à la chaleur dans une deuxième extrudeuse pour compléter le composé afin d'obtenir ledit mélange ;
- fournir en continu au moins l'un desdits mélanges à chacune desdites stations fonctionnelles (5, 6, 7, 8, 9),
- réaliser plusieurs desdits composants structurels à partir d'au moins l'un desdits mélanges,
- former un pneu non vulcanisé en déposant lesdits composants structurels sur un support toroïdal, et
- vulcaniser ledit pneu non vulcanisé.

2. Procédé selon la revendication 1, dans lequel l'étape d'extrusion du composé comprend l'étape consistant à alimenter la première extrudeuse avec ledit au moins un matériau élastomère et un matériau de remplissage de renforcement.

3. Procédé selon la revendication 2, dans lequel l'étape d'extrusion du composé comprend l'étape consistant à fournir au moins un plastifiant.

4. Procédé selon la revendication 1, dans lequel ledit au moins un matériau élastomère est fourni sous une forme subdivisée.

5. Procédé selon la revendication 1, dans lequel le composé produit dans la première extrudeuse est filtré avant d'être envoyé à la deuxième extrudeuse.

6. Procédé selon la revendication 1, dans lequel le composé produit dans la première extrudeuse est mis sous forme de granulés avant d'être envoyé à la deuxième extrudeuse.

7. Procédé selon la revendication 1, dans lequel lesdits composants structurels comprennent au moins un élément continu de forme allongée.

8. Procédé selon la revendication 1, dans lequel lesdits composants structurels comprennent au moins un élément en bande renforcé.

9. Procédé selon la revendication 7, dans lequel l'étape de formation d'un pneu non vulcanisé comprend l'étape consistant à effectuer un dépôt périphérique dudit élément continu de forme allongée sur ledit support toroïdal.

10. Procédé selon la revendication 8, dans lequel l'étape de formation d'un pneu non vulcanisé comprend l'étape consistant à effectuer le dépôt, sur ledit support toroïdal, de longueurs dudit élément en bande renforcé dans une direction perpendiculaire à un axe de rotation du pneu.

11. Système pour la fabrication de pneus, comprenant :
- une unité de production de mélanges (90) pour produire une pluralité de mélanges, chaque mélange comprenant au moins un matériau élastomère ;
- une unité de construction (2) comprenant une pluralité de stations fonctionnelles (5, 6, 7, 8, 9), chaque station fonctionnelle comprenant au moins une extrudeuse et au moins un support toroïdal, et étant conçue pour former et assembler au moins un composant structurel correspondant d'au moins un modèle de pneu à fabriquer, et
- une unité de vulcanisation (3), comportant des moules de vulcanisation (24, 25, 26, 27, 28, 29) destinés à recevoir les pneus construits,
**caractérisé en ce que** l'unité de production de mélanges (90) comprend au moins une unité extrudeuse (91, 92, 93, 94), ladite au moins une unité extrudeuse comprenant :
- une première extrudeuse pour préparer un composé dépourvu de composant sensible à la chaleur, et
- une deuxième extrudeuse pour compléter le composé en y introduisant les composants sensibles à la chaleur, lesdites première et deuxième extrudeuses étant agencées en séquence,
ladite unité de production de mélanges (90) fournissant en continu au moins l'une desdites stations fonctionnelles (5, 6, 7, 8, 9) avec au moins un mélange adapté pour former ledit au moins un composant structurel de pneu.

12. Système selon la revendication 11, dans lequel lesdits composants structurels comprennent au moins un élément continu de forme allongée.

13. Système selon la revendication 11, dans lequel lesdits composants structurels comprennent au moins un élément en bande renforcé.

14. Système selon la revendication 11, comprenant en outre des dispositifs (R1, R2, R3, R4, R5) pour le transfert et le déplacement des pneus en cours de production entre les stations fonctionnelles (5, 6, 7, 8, 9), lesdits dispositifs étant capables de déplacer sélectivement chaque modèle de pneu à l'intérieur d'une station fonctionnelle.
